# EUROPEAN PATENT APPLICATION

(11) **EP 4 800 067 A1**
(43) Date of publication of application: **02.09.2026**
(21) Application number: 24882956.6
(22) Date of filing: 16.10.2024
(51) Int. Cl.: C08L 25/12, C08L 55/02, C08L 35/00, C08L 91/00, C08K 5/11

(54) **THERMOPLASTIC RESIN COMPOSITION AND ARTICLE MANUFACTURED USING SAME**

(30) Priority: 27.10.2023 KR 20230145999
(71) Applicant: LOTTE CHEMICAL CORPORATION, Seoul 05551 (KR)
(72) Inventor: MOON, Ganghyeok, Uiwang-si, Gyeonggi-do 16073 (KR); PARK, Jungeun, Uiwang-si, Gyeonggi-do 16073 (KR); CHU, Donghui, Uiwang-si, Gyeonggi-do 16073 (KR)
(74) Representative: Germain Maureau
(86) International application number: PCT/KR2024/096371
(87) International publication number: WO 2025/089930

(57) **Abstract**

The present invention relates to a thermoplastic resin composition including (D) 1 to 5 parts by weight of castor oil with respect to 100 parts by weight of a base resin that includes (A) 20 to 30 wt% of a butadiene-based rubber-modified aromatic vinyl-vinyl cyanide graft copolymer, (B) 50 to 70 wt% of an aromatic vinyl-vinyl cyanide copolymer, and (C) 5 to 20 wt% of an α-methylstyrene-based copolymer; and a molded article manufactured using same.

## Description

### [Technical Field]

The present invention relates to a thermoplastic resin composition and a molded article manufactured therefrom.

### [Background Art]

Styrene-based resins, represented by acrylonitrile-butadiene-styrene copolymer (ABS) resins, are widely used in various applications due to their excellent moldability, mechanical properties, appearance, secondary processability, and the like.

Molded articles manufactured using styrenic resins may be widely applied to various products requiring painting/non-painting, for example, various interior/exterior materials for automobiles and/or electronic devices, and are used in combination with various components according to desired performance, and for example, to manufacture molded articles having high heat resistance, an N-phenylmaleimide-based copolymer or an α-methylstyrene-based copolymer is often mixed with an ABS resin.

However, when an α-methylstyrene-based copolymer or an N-phenylmaleimide-based copolymer is mixed with an ABS resin, the glass transition temperature of the α-methylstyrene-based copolymer or the N-phenylmaleimide-based copolymer is higher than that of the ABS resin, necessitating an increase in the processing temperature during the extrusion process, which causes a problem in that the generation of volatile organic compounds is accelerated at high processing temperatures, resulting in a strong odor.

Conventionally, such problems have been solved by methods such as adding water during the extrusion process to volatilize organic compounds during the manufacturing process, adding a porous material to adsorb organic compounds onto the porous material, or adding a substance that emits a different type of odor to offset the odor.

However, when water is added during the extrusion process, a large amount of steam is generated, limiting the amount of organic compounds that may be volatilized; when a porous material is added, inorganic components constituting the porous material act as defects in the resin, thereby lowering the impact resistance of the molded article; and when a substance that emits a different type of odor is added, there is a problem in that the substance that emits a different type of odor may deteriorate during a high-temperature processing process, making the odor even worse.

Therefore, there is a demand for development of a thermoplastic resin composition having excellent impact resistance and low odor properties.

### [Disclosure]

### [Description of the Drawings]

### [Technical Problem]

Provided are a thermoplastic resin composition having excellent impact resistance and low odor properties, and a molded article manufactured therefrom.

### [Technical Solution]

According to an embodiment, provided is a thermoplastic resin composition including, based on 100 parts by weight of a base resin including (A) 20 to 30 wt% of a butadiene-based rubber-modified aromatic vinyl-vinyl cyanide graft copolymer, (B) 50 to 70 wt% of an aromatic vinyl-vinyl cyanide copolymer, and (C) 5 to 20 wt% of an α-methylstyrene-based copolymer, (D) 1 to 5 parts by weight of castor oil.

The (A) butadiene-based rubber-modified aromatic vinyl-vinyl cyanide graft copolymer may have a core-shell structure including a core of a butadiene-based rubbery polymer, and a shell formed by graft polymerization of an aromatic vinyl compound and a vinyl cyanide compound.

An average particle size of the butadiene-based rubbery polymer may be 0.2 to 1.0 µm.

The (A) butadiene-based rubber-modified aromatic vinyl-vinyl cyanide graft copolymer may be an acrylonitrile-butadiene-styrene graft copolymer.

The (B) aromatic vinyl-vinyl cyanide copolymer may include 55 to 80 wt% of a component derived from an aromatic vinyl compound (provided that α-methylstyrene is excluded) and 20 to 45 wt% of a component derived from a vinyl cyanide compound, based on 100 wt%.

The (B) aromatic vinyl-vinyl cyanide copolymer may have a weight average molecular weight of 80,000 to 300,000 g/mol.

The (B) aromatic vinyl-vinyl cyanide copolymer may be a styrene-acrylonitrile copolymer.

The (C) α-methylstyrene-based copolymer may be a copolymer of a monomer mixture including 40 to 75 wt% of α-methylstyrene, 15 to 35 wt% of an aromatic vinyl compound, and 10 to 30 wt% of a vinyl cyanide compound.

The (C) α-methylstyrene-based copolymer may be an α-methylstyrene-styrene-acrylonitrile copolymer.

The (D) castor oil may include a structure of Chemical Formula 1:

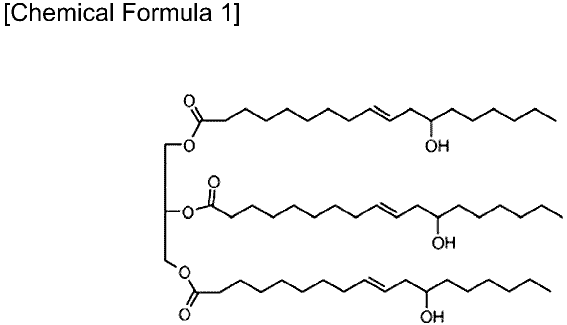

The thermoplastic resin composition may further include (E) an N-phenyl maleimide-styrene-maleic anhydride copolymer.

The (E) N-phenyl maleimide-styrene-maleic anhydride copolymer may include 10 to 55 wt% of a component derived from N-phenyl maleimide, 40 to 80 wt% of a component derived from styrene, and 1 to 10 wt% of a component derived from maleic anhydride.

The (E) N-phenyl maleimide-styrene-maleic anhydride copolymer may be included in an amount of 1 to 10 parts by weight based on 100 wt% of the base resin.

The thermoplastic resin composition may further include at least one additive selected from a nucleating agent, a coupling agent, a filler, a plasticizer, a lubricant, a mold release agent, an antibacterial agent, a heat stabilizer, an antioxidant, an ultraviolet stabilizer, a flame retardant, a colorant, and an impact modifier.

Meanwhile, according to another embodiment, a molded article manufactured from the aforementioned thermoplastic resin composition is provided.

The molded article may have an Izod impact strength of greater than or equal to 20 kgf·cm/cm as measured on a 1/4 inch thick specimen according to the ASTM D256 standard, and may have an odor grading of less than or equal to 3.0 as measured according to the VDA 270 standard.

### [Advantageous Effects]

The thermoplastic resin composition and the molded article using the same according to an embodiment have excellent impact resistance and low odor property, and thus may be used for applications such as automobile interior materials.

### [Best Mode]

Hereinafter, embodiments of the present invention are described in detail. However, these embodiments are just examples, and the present disclosure is not limited thereto and the present disclosure is defined by the scope of claims.

In the present specification, unless otherwise mentioned, "copolymerization" refers to a block copolymerization, a random copolymerization, or a graft-copolymerization and "copolymer" refers to a block copolymer, a random copolymer, or a graft copolymer.

In the present specification, unless otherwise mentioned, the average particle diameter of the rubbery polymer refers to a volume average diameter, and means a Z-average particle diameter measured using a dynamic light scattering analysis equipment.

In the present specification, unless otherwise mentioned, the weight average molecular weight is measured by dissolving a powder sample in an appropriate solvent and then performing gel permeation chromatography (GPC) with a 1200 series made by Agilent Technologies Inc. (a standard sample is polystyrene made by Shodex).

A thermoplastic resin composition according to an embodiment includes, based on 100 parts by weight of a base resin including (A) a butadiene-based rubber-modified aromatic vinyl-vinyl cyanide graft copolymer 20 to 30 wt%, (B) 50 to 70 wt% of an aromatic vinyl-vinyl cyanide copolymer, and (C) 5 to 20 wt% of an α-methylstyrene-based copolymer, (D) 1 to 5 parts by weight of castor oil.

Hereinafter, each component of the thermoplastic resin composition is described in detail.

### (A) Butadiene-based rubber-modified aromatic vinyl-vinyl cyanide graft copolymer

In an embodiment, the (A) butadiene-based rubber-modified aromatic vinyl-vinyl cyanide graft copolymer imparts impact resistance to the thermoplastic resin composition.

In an embodiment, the (A) butadiene-based rubber-modified aromatic vinyl-vinyl cyanide graft copolymer may have a core-shell structure in which a core made of a butadiene-based rubbery polymer component and a shell is formed by graft polymerizing an aromatic vinyl compound and a vinyl cyanide compound onto the core.

The (A) butadiene-based rubber-modified aromatic vinyl-vinyl cyanide graft copolymer according to an embodiment may be obtained by adding an aromatic vinyl compound and a vinyl cyanide compound to a butadiene-based rubbery polymer, and performing graft polymerization through conventional polymerization methods such as emulsion polymerization and bulk polymerization.

The butadiene-based rubbery polymer may be selected from a butadiene rubbery polymer, a butadiene-styrene rubbery polymer, a butadiene-acrylonitrile rubbery polymer, a butadiene-acrylate rubbery polymer, and a mixture thereof.

The aromatic vinyl compound may be selected from styrene, α-methylstyrene, p-methylstyrene, p-t-butylstyrene, 2,4-dimethylstyrene, chlorostyrene, vinyltoluene, vinylnaphthalene, and a mixture thereof.

The vinyl cyanide compound may be selected from acrylonitrile, methacrylonitrile, fumaronitrile, and a mixture thereof.

In the (A) butadiene-based rubber-modified aromatic vinyl-vinyl cyanide graft copolymer copolymer, an average particle diameter of the butadiene-based rubbery polymer may be, for example 0.2 to 1.0 µm, for example 0.2 to 0.8 µm, for example 0.2 to 0.5 µm. When the above range is satisfied, the thermoplastic resin composition may exhibit excellent impact resistance and appearance characteristics.

Based on 100 wt% of the (A) butadiene-based rubber-modified aromatic vinyl-vinyl cyanide graft copolymer, the butadiene-based rubbery polymer may be included in an amount of 40 to 70 wt%, for example 40 to 60 wt%, for example 50 to 60 wt%. On the other hand, a weight ratio of the aromatic vinyl compound and the vinyl cyanide compound which are graft-polymerized on the core of the butadiene-based rubbery polymer component may be 6:4 to 8:2.

In an embodiment, the (A) butadiene-based rubber-modified aromatic vinyl-vinyl cyanide graft copolymer may be an acrylonitrile-butadiene-styrene graft copolymer (g-ABS).

The (A) butadiene-based rubber-modified aromatic vinyl-vinyl cyanide graft copolymer may be included in an amount of 20 to 30 wt%, for example 20 to 25 wt%, for example 25 to 30 wt%, based on 100 wt% of the base resin. Within the above wt% range, the thermoplastic resin composition may have excellent impact resistance and balance of overall physical properties.

### (B) Aromatic vinyl-vinyl cyanide copolymer

In an embodiment, the (B) aromatic vinyl-vinyl cyanide copolymer may maintain compatibility between components of the thermoplastic resin composition at a certain level.

In an embodiment, the (B) aromatic vinyl-vinyl cyanide copolymer may have a weight average molecular weight (Mw) of greater than or equal to 80,000 g/mol, for example, greater than or equal to 85,000 g/mol, for example, greater than or equal to 90,000 g/mol, and for example, less than or equal to 300,000 g/mol, for example, less than or equal to 200,000 g/mol, and for example, 80,000 to 300,000 g/mol, for example, 80,000 to 200,000 g/mol.

In an embodiment, the (B) aromatic vinyl-vinyl cyanide copolymer may be prepared through conventional polymerization methods such as emulsion polymerization, suspension polymerization, solution polymerization, and bulk polymerization of an aromatic vinyl compound and a vinyl cyanide compound.

The aromatic vinyl compound, excluding α-methylstyrene, may be selected from styrene, p-methylstyrene, p-t-butylstyrene, 2,4-dimethylstyrene, chlorostyrene, vinyltoluene, vinylnaphthalene, and a mixture thereof.

The vinyl cyanide compound may be selected from acrylonitrile, methacrylonitrile, fumaronitrile, and a mixture thereof.

The (B) aromatic vinyl-vinyl cyanide copolymer may include, for example, greater than or equal to 55 wt%, for example, greater than or equal to 60 wt%, for example, greater than or equal to 65 wt%, and for example, less than or equal to 80 wt%, for example, less than or equal to 75 wt%, for example, 55 to 80 wt%, for example, 60 to 75 wt% of a component derived from the aromatic vinyl compound (provided that α-methylstyrene is excluded), based on 100 wt%.

In addition, the (B) aromatic vinyl-vinyl cyanide copolymer may include, for example, greater than or equal to 20 wt%, for example, greater than or equal to 25 wt%, and for example, less than or equal to 45 wt%, for example, less than or equal to 40 wt%, for example, 20 to 45 wt%, for example, 25 to 40 wt% of a component derived from the vinyl cyanide compound, based on 100 wt%.

In an embodiment, the (B) aromatic vinyl-vinyl cyanide copolymer may be a styrene-acrylonitrile copolymer (SAN).

In an embodiment, the (B) aromatic vinyl-vinyl cyanide copolymer may be included in an amount of 50 to 70 wt%, for example, 50 to 60 wt%, for example, 60 to 70 wt%, based on 100 wt% of the base resin. Within the above weight percent range, compatibility of components in the thermoplastic resin composition may be improved.

### (C) α-methylstyrene-based copolymer

In an embodiment, the (C) α-methylstyrene-based copolymer may improve the heat resistance of the thermoplastic resin composition.

The (C) α-methylstyrene-based copolymer may be prepared using a conventional preparation method, for example, emulsion polymerization, suspension polymerization, solution polymerization, bulk polymerization, or the like.

In an embodiment, the (C) α-methylstyrene-based copolymer may be a copolymer of a monomer mixture including 40 to 75 wt% of α-methylstyrene, 15 to 35 wt% of an aromatic vinyl compound, and 10 to 30 wt% of a vinyl cyanide compound. Within the above weight range, heat resistance and impact resistance of the thermoplastic resin composition may be improved.

In the (C) α-methylstyrene-based copolymer, the aromatic vinyl compound may be selected from styrene, α-methylstyrene, p-methylstyrene, p-t-butylstyrene, 2,4-dimethylstyrene, chlorostyrene, vinyltoluene, vinylnaphthalene, and a combination thereof, and the vinyl cyanide compound may be selected from acrylonitrile, methacrylonitrile, fumaronitrile, and a combination thereof.

In an embodiment, the (C) α-methylstyrene-based copolymer may be an α-methylstyrene-styrene-acrylonitrile copolymer.

The (C) α-methylstyrene-based copolymer may have a weight average molecular weight (Mw) of 50,000 to 300,000 g/mol, for example, 100,000 to 200,000 g/mol. When the above range is satisfied, the thermoplastic resin composition including the same may exhibit excellent impact resistance and heat resistance.

The (C) α-methylstyrene-based copolymer may be included in an amount of 5 to 20 wt%, for example, 5 to 10 wt%, for example, 10 to 20 wt%, for example, 10 to 15 wt%, based on 100 wt% of the base resin. Within the above weight range, heat resistance, flowability, and impact resistance of the thermoplastic resin composition may be improved.

### (D) Castor oil

In an embodiment, (D) castor oil may impart low-odor characteristics to the thermoplastic resin composition.

In an embodiment, the (D) castor oil may be a vegetable oil.

In an embodiment, the (D) castor oil may include greater than or equal to 90 wt%, for example, greater than or equal to 95 wt%, for example, 100 wt% of a ricinoleic acid-derived structure, based on 100 wt%.

In an embodiment, the (D) castor oil may include a structure of Chemical Formula 1:

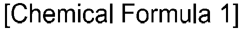

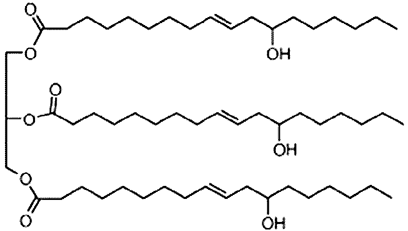

The (D) castor oil may be included in an amount of 1 to 5 parts by weight, for example, 1 to 3 parts by weight, for example, 1 to 2 parts by weight, based on 100 parts by weight of the base resin. Within the above parts by weight range, low-odor characteristics of the thermoplastic resin composition including the same may be improved.

### (E) N-phenyl maleimide-styrene-maleic anhydride (PMI-SM-MAH) copolymer

In an embodiment, the base resin may further include (E) an N-phenyl maleimide-styrene-maleic anhydride copolymer. The (E) N-phenyl maleimide-styrene-maleic anhydride copolymer may make the heat resistance of the thermoplastic resin composition even more improved.

In an embodiment, the (E) N-phenyl maleimide-styrene-maleic anhydride copolymer may be prepared by copolymerizing a mixture of N-phenyl maleimide, styrene, and maleic anhydride, or through an imidization reaction of a styrene and maleic anhydride copolymer.

In an embodiment, the (E) N-phenyl maleimide-styrene-maleic anhydride copolymer may include 10 to 55 wt% of a component derived from N-phenyl maleimide, 40 to 80 wt% of a component derived from styrene, and 1 to 10 wt% of a component derived from maleic anhydride.

The (E) N-phenyl maleimide-styrene-maleic anhydride copolymer may have a glass transition temperature (Tg) of 145 to 200 °C, for example 155 to 200 °C, for example 165 to 200 °C, but is not limited thereto.

The (E) N-phenyl maleimide-styrene-maleic anhydride copolymer may have a weight average molecular weight (Mw) of 10,000 to 300,000 g/mol, for example, 15,000 to 200,000 g/mol. When the weight average molecular weight of the (E) N-phenyl maleimide-styrene-maleic anhydride copolymer is within the above range, a thermoplastic resin composition including the same and a molded article manufactured therefrom may exhibit excellent heat resistance while maintaining an excellent balance of physical properties.

In an embodiment, the (E) N-phenyl maleimide-styrene-maleic anhydride copolymer may be included in an amount of 1 to 10 parts by weight, for example, 1 to 5 parts by weight, for example, 3 to 5 parts by weight, based on 100 wt% of the base resin. Within the above range, a thermoplastic resin composition including the same and a molded article manufactured therefrom may exhibit excellent mechanical properties and heat resistance.

### (F) Additives

In addition to the components (A) to (E), the thermoplastic resin composition according to an embodiment may further include one or more additives required according to the end use of the thermoplastic resin composition.

Specifically, the additives may be a nucleating agent, a coupling agent, a filler, a plasticizer, a lubricant, a mold release agent, an antibacterial agent, a heat stabilizer, an antioxidant, a UV stabilizer, a flame retardant, a colorant, an impact modifier, etc., and these may be used alone or in combination of two or more.

The additives may be appropriately included within a range that does not impair the physical properties of the thermoplastic resin composition, and specifically, may be included in an amount of less than or equal to 20 parts by weight based on 100 parts by weight of a base resin, but is not limited thereto.

The thermoplastic resin composition according to the present invention may be prepared by a known method for preparing a thermoplastic resin composition.

For example, the thermoplastic resin composition according to the present invention may be prepared in the form of pellets by mixing the constituents of the present invention and other additives and then melt-kneading the mixture in an extruder.

A molded article according to an embodiment of the present invention may be manufactured from the above-described thermoplastic resin composition through a known molding method. For example, the molded article may be manufactured by a method such as extrusion molding or injection molding, but is not limited thereto.

The molded article may have an Izod impact strength of greater than or equal to 20 kgf·cm/cm as measured on a 1/4 inch thick specimen according to the ASTM D256 standard, and may have an odor grading of less than or equal to 3.0 as measured according to the VDA 270 standard.

### [Mode for Invention]

Hereinafter, the present invention is illustrated in more detail with reference to examples and comparative examples. However, the following examples and comparative examples are provided for the purpose of descriptions and the present invention is not limited thereto.

### Examples 1 to 3 and Comparative Examples 1 to 5

Thermoplastic resin compositions of Examples 1 to 3 and Comparative Examples 1 to 5 were prepared according to the component amount ratios described in Table 1 below.

In Table 1, (A), (B), and (C) are included in the base resin and are expressed in wt% based on the total weight of the base resin, and (D1) to (D4) and (E) are added to the base resin and are expressed in parts by weight based on 100 parts by weight of the base resin.

The components shown in Table 1 were dry-mixed, and then quantitatively and continuously injected into a supply section of a twin-screw extruder (L/D = 44, Φ = 45 mm) and fused/kneaded. Then, the thermoplastic resin compositions pelletized through a twin-screw extruder were dried at about 80 °C for about 4 hours, and then injection-molded specimens for physical property evaluation were prepared using a 120-ton injection molding machine with a cylinder temperature of about 240 °C and a mold temperature of about 60 °C.

**(Table 1)**

| | Example 1 | Example 2 | Example 3 | Comparative Example 1 | Comparative Example 2 | Comparative Example 3 | Comparative Example 4 | Comparative Example 5 |
|---|---|---|---|---|---|---|---|---|
| (A) | 27 | 23 | 26 | 27 | 26 | 27 | 27 | 27 |
| (B) | 62 | 62 | 64 | 62 | 59 | 62 | 62 | 62 |
| (C) | 11 | 15 | 10 | 11 | 15 | 11 | 11 | 11 |
| (D1) | 1 | 3 | 3 | - | - | - | - | - |
| (D2) | - | - | - | - | - | 1 | - | - |
| (D3) | - | - | - | - | - | - | 1.6 | - |
| (D4) | - | - | - | - | - | - | - | 3 |
| (E) | 5 | - | 3 | 5 | - | 5 | 5 | 5 |

Each component provided in Table 1 is illustrated as follows. (A) Butadiene-based rubber-modified aromatic vinyl-vinyl cyanide graft copolymer

Acrylonitrile-butadiene-styrene graft copolymer (Lotte Chemical Corp.) including about 58 wt% of a core (average particle diameter: about 0.25 µm) made of a butadiene rubbery polymer and a shell formed by graft-polymerization of acrylonitrile and styrene (in a weight ratio of acrylonitrile : styrene = about 2.5 : about 7.5) on the core

### (B) Aromatic vinyl-vinyl cyanide copolymer

Styrene-acrylonitrile copolymer (Lotte Chemical Corp.) copolymerized from a monomer mixture of about 32 wt% of acrylonitrile and about 68 wt% of styrene and having a weight average molecular weight of about 120,000 g/mol

### (C) α-methylstyrene-based copolymer

An α-methylstyrene-styrene-acrylonitrile copolymer (Lotte Chemical Corp.) having a weight average molecular weight of about 160,000 g/mol obtained by copolymerizing a monomer mixture including about 54 wt% of α-methylstyrene, about 19 wt% of styrene, and about 27 wt% of acrylonitrile

### (E) N-phenyl maleimide-styrene-maleic anhydride copolymer

An N-phenyl maleimide-styrene-maleic anhydride copolymer (Denka Co., Ltd.) having a glass transition temperature (Tg) of about 196 °C and an amount of N-phenyl maleimide-derived component of about 49 wt%

### (D1) Castor oil

Castor oil (Cas No. 8001-79-4, Lotte Wellfood Co., Ltd.) having a melting point of about -10 °C, a specific gravity of about 0.95 measured at 25 °C, and a viscosity of about 7 poise measured at 25 °C

### (D2) Distilled water

### (D3) Porous material

Zeolite (Aekyung Chemical Co., Ltd.) having a pore size of about 4.2 Å, an average particle size (D50) of about 3 µm, and a bulk density of about 400 g/cm³

### (D4) Canola oil

Canola oil (Cas No. 8002-13-9, Lotte Wellfood Co., Ltd.) having a melting point of about 20 °C and a specific gravity of about 0.913 measured at 25 °C

### Experimental Examples

Experiment results are provided in Table 2.
(1) Impact resistance (unit: kgf·cm/cm): Notched Izod impact strength was measured for a 1/4 inch thick specimen according to the ASTM D256 standard.
(2) Low-odor characteristics (unit: grade)

After putting 20g of a thermoplastic resin composition pellet sample in a 1L container according to VDA 270 TEST Version B3 and aging it at 80 °C for 2 hours, 5 trained panelists smelled it and evaluated the odor grading according to the grading standard below, and then the average grade was obtained.

The grading standard is as follows.
Grade 1 - imperceptible odor level
Grade 2 - odor can be perceived but is not unpleasant
Grade 3 - odor can be clearly perceived but is not unpleasant
Grade 4 - unpleasant
Grade 5 - very unpleasant
Grade 6 - unbearably unpleasant

**(Table 2)**

| | Example 1 | Example 2 | Example 3 | Comparative Example 1 | Comparative Example 2 | Comparative Example 3 | Comparative Example 4 | Comparative Example 5 |
|---|---|---|---|---|---|---|---|---|
| Izod impact strength | 23 | 29 | 25 | 19 | 23 | 23 | 16 | 19 |
| Odor grading | 3.0 | 3.0 | 2.5 | 4.0 | 4.0 | 3.5 | 3.0 | 4.0 |

From Table 1 and Table 2 above, it can be seen that by using the butadiene-based rubber-modified aromatic vinyl-vinyl cyanide graft copolymer, the aromatic vinyl-vinyl cyanide copolymer, the α-methylstyrene-based copolymer, and the castor oil in optimal amounts as in Examples 1 to 3, both mechanical properties such as impact resistance and low odor properties are improved. In addition, when an N-phenyl maleimide-styrene-maleic anhydride copolymer is included in the composition to improve heat resistance in addition to the above components, the physical properties of the thermoplastic resin composition may be further improved. Furthermore, it can be confirmed that Examples 1 to 3 of the present application have superior impact resistance and low odor properties compared to the cases where water is added or a porous material is added (corresponding to Comparative Examples 3 and 4, respectively), which were conventionally applied to eliminate odors. In addition, although the canola oil used in Comparative Example 5 includes a triglyceride structure like castor oil, it can be confirmed that its impact resistance and low odor properties are significantly lower than those of Examples 1 to 3 of the present application.

While this invention has been described in connection with what is presently considered to be practical example embodiments, it is to be understood that the invention is not limited to the disclosed embodiments, but, on the contrary, is intended to cover various modifications and equivalent arrangements included within the spirit and scope of the appended claims.

## Claims

1. A thermoplastic resin composition, comprising
based on 100 parts by weight of a base resin comprising (A) 20 to 30 wt% of a butadiene-based rubber-modified aromatic vinyl-vinyl cyanide graft copolymer;
(B) 50 to 70 wt% of an aromatic vinyl-vinyl cyanide copolymer; and
(C) 5 to 20 wt% of an α-methylstyrene-based copolymer,
(D) 1 to 5 parts by weight of castor oil.

2. The thermoplastic resin composition of claim 1, wherein
the (A) butadiene-based rubber-modified aromatic vinyl-vinyl cyanide graft copolymer has a core-shell structure comprising a core of a butadiene-based rubbery polymer, and a shell formed by graft polymerization of an aromatic vinyl compound and a vinyl cyanide compound.

3. The thermoplastic resin composition of claim 2, wherein
an average particle size of the butadiene-based rubbery polymer is 0.2 to 1.0 µm.

4. The thermoplastic resin composition of any one of claim 1 to claim 3, wherein
the (A) butadiene-based rubber-modified aromatic vinyl-vinyl cyanide graft copolymer is an acrylonitrile-butadiene-styrene graft copolymer.

5. The thermoplastic resin composition of any one of claim 1 to claim 4, wherein
the (B) aromatic vinyl-vinyl cyanide copolymer comprises 55 to 80 wt% of a component derived from an aromatic vinyl compound (provided that α-methylstyrene is excluded) and 20 to 45 wt% of a component derived from a vinyl cyanide compound, based on 100 wt%.

6. The thermoplastic resin composition of any one of claim 1 to claim 5, wherein
the (B) aromatic vinyl-vinyl cyanide copolymer is a styrene-acrylonitrile copolymer.

7. The thermoplastic resin composition of any one of claim 1 to claim 6, wherein
the (C) α-methylstyrene-based copolymer is a copolymer of a monomer mixture comprising 40 to 75 wt% of α-methylstyrene, 15 to 35 wt% of an aromatic vinyl compound, and 10 to 30 wt% of a vinyl cyanide compound.

8. The thermoplastic resin composition of any one of claim 1 to claim 6, wherein
the (C) α-methylstyrene-based copolymer is an α-methylstyrene-styrene-acrylonitrile copolymer.

9. The thermoplastic resin composition of any one of claim 1 to claim 8, wherein
the (D) castor oil comprises a structure of Chemical Formula 1:

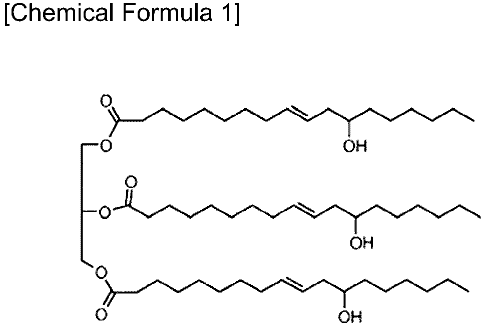

10. The thermoplastic resin composition of any one of claim 1 to claim 9, wherein
the thermoplastic resin composition further comprises (E) an N-phenyl maleimide-styrene-maleic anhydride copolymer.

11. The thermoplastic resin composition of any one of claim 1 to claim 10, wherein
the (E) N-phenyl maleimide-styrene-maleic anhydride copolymer comprises 10 to 55 wt% of a component derived from N-phenyl maleimide, 40 to 80 wt% of a component derived from styrene, and 1 to 10 wt% of a component derived from maleic anhydride.

12. The thermoplastic resin composition of any one of claim 1 to claim 11, wherein
the (E) N-phenyl maleimide-styrene-maleic anhydride copolymer is included in an amount of 1 to 10 parts by weight based on 100 wt% of the base resin.

13. The thermoplastic resin composition of any one of claim 1 to claim 12, wherein
the thermoplastic resin composition further comprises at least one additive selected from a nucleating agent, a coupling agent, a filler, a plasticizer, a lubricant, a mold release agent, an antibacterial agent, a heat stabilizer, an antioxidant, an ultraviolet stabilizer, a flame retardant, a colorant, and an impact modifier.

14. A molded article manufactured from the thermoplastic resin composition of any one of claim 1 to claim 13.

15. The molded article of claim 14, wherein
the molded article has an Izod impact strength of greater than or equal to 20 kgf·cm/cm as measured on a 1/4 inch thick specimen according to the ASTM D256 standard, and has an odor rating of less than or equal to 3.0 as measured according to VDA 270.
